# EUROPÄISCHE PATENTSCHRIFT

(11) **EP 0 545 964 B1**
(45) Veröffentlichungstag und Bekanntmachung des Hinweises auf die Patenterteilung: **02.11.1994**
(21) Anmeldenummer: 91914517.7
(22) Anmeldetag: 13.08.1991
(51) Int. Cl.: C09D 163/00, C08J 7/04

(54) **VERFAHREN ZUM GRUNDIEREN ODER EINSCHICHTIGEN LACKIEREN VON KUNSTSTOFFEN MIT WÄSSRIGEN LACKEN**
PROCESS FOR APPLYING A PRIMING COAT OR A SINGLE COAT OF PAINT ON PLASTICS USING WATER-BASED PAINTS
PROCEDE D'APPLICATION D'UNE COUCHE DE FOND OU D'UNE SEULE COUCHE DE LAQUE A L'EAU SUR DES MATIERES PLASTIQUES

(30) Priorität: 28.08.1990 DE 4027128
(43) Veröffentlichungstag der Anmeldung: 16.06.1993
(73) Patentinhaber: BASF Lacke + Farben AG, 48165 Münster-Hiltrup (DE)
(72) Erfinder: FRITSCHE, Kirsten, D-8700 Würzburg (DE); FAUL, Dieter, D-6702 Bad Dürkheim (DE); METZDORF, Hartmut, Victoria 3216 (AU); BUDDE, Jörg, D-4403 Senden (DE)
(74) Vertreter: Münch, Volker, Dr.
(86) Internationale Anmeldenummer: EP9101532
(87) Internationale Veröffentlichungsnummer: WO9203513

(56) Entgegenhaltungen:
- EP-A- 0 225 530
- EP-A- 0 272 427
- FR-A- 2 128 773
- US-A- 4 212 039

## Beschreibung

Die Erfindung betrifft ein verfahren zum Grundieren oder einschichtigen Lackieren von Kunststoffen mit wäßrigen Lacken und die Verwendung eines wäßrigen Lackes zum Grundieren oder einschichtigen Lackieren von Kunststoffen.

Kunststoffe finden in nahezu allen Einsatzgebieten, insbesondere auch im Kraftfahrzeugbau zunehmende Verwendung. Bei Kraftfahrzeugen sollten sich die Kunststoffteile weder optisch noch durch geringere Beständigkeit gegen Steinschlag, Witterung usw. von den metallischen Teilen der Karosserie unterscheiden. Um dies zu erreichen ist man bestrebt, die Kunststoffteile so zu lackieren, daß sie sich hinsichtlich Aussehen und Beständigkeit gegen steinschlag, Witterung usw. von den metallischen Teilen der Karosserie nicht unterscheiden. Ein einfaches Überlackieren mit den für die metallischen Teile eingesetzten Lacken führt dabei aber nicht zum Erfolg, weil Haftungsprobleme und/oder mangelhafte Kälteschlagzähigkeit und/oder mangelnde Beständigkeit gegen Steinschlag auftreten. Um diese Probleme zu lösen, werden Kunststoffteile mit einer Grundierung lackiert, auf die dann ein Decklack lackiert werden kann. Aus ökologischen und ökonomischen Gründen ist man bestrebt, zur Grundierung wäßrige Lacke einzusetzen. Beim Einsatz von wäßrigen Lacken zur Grundierung von Kunststoffen werden immer wieder mangelnde Kerbschlagzähigkeit und/oder mangelnde Haftung zwischen Substrat und Grundierung, insbesondere zwischen Grundierung und überlackiertem Decklack beobachtet.

Die der vorliegenden Erfindung zugrundeliegende Aufgabenstellung besteht in der Bereitstellung von wäßrigen Lacken, die zur Grundierung oder einschichtigen Lackierung von Kunststoffen geeignet sind. Mit den bereitgestellten Lacken sollte es insbesondere möglich sein, Kunststoffe so zu grundieren, daß keine bzw. nur verminderte Probleme hinsichtlich Kälteschlagzähigkeit und/oder Haftung auftreten.

Diese Aufgabe wird überraschenderweise durch ein Verfahren zum Grundieren oder einschichtigen Lackieren von Kunststoffen mit wäßrigen Lacken gelöst, das dadurch gekennzeichnet ist, daß ein wäßriger Lack eingesetzt wird, der ein zumindest teilweise protoniertes Umsetzungsprodukt aus
(A) einem Butadien-Acrylnitrilcopolymeren mit einem Acrylnitrilgehalt von 5 bis 45 Gew. % und einem Butadiengehalt von 55 bis 95 Gew. %, das pro Molekül im Mittel 1,4 bis 3,0 primäre und/oder sekundäre Aminogruppen, sowie gegebenenfalls tertiäre Aminogruppen, enthält und ein zahlenmittleres Molekulargewicht von 500 bis 15.000 aufweist oder ein Gemisch aus solchen Butadien-Acrylnitrilcopolymeren und
(B) einer organischen Verbindung, die ein zahlenmittleres Molekulargewicht von 140 bis 10.000 aufweist und im statistischen Mittel mindestens 1,5 Epoxidgruppen pro Molekül enthält, ausgewählt aus der Gruppe der
   - Glycidylether von aliphatischen Diolen
   - Glycidylether von Polyphenolen
   - aromatischen Epoxidharze, die erhältlich sind, indem man die oben genannten Glycidylether mit einem Polyphenol reagieren läßt und das erhaltene Produkt mit Epichlorhydrin weiter umsetzt
   - Glycidylether von Polyolen, die durch Polymerisation von Ethylenoxid, Propylenoxid, Tetrahydrofuran oder anderen cyclischen Ethern erhältlich sind
   oder ein Gemisch aus solchen organischen Verbindungen
enthält, wobei die Komponenten (A) und (B) bei der Herstellung des Umsetzungsproduktes in solchen Mengen eingesetzt werden, daß auf ein Äquivalent Epoxidgruppen der Komponente (B) 1,05 bis 20 Äquivalente reaktive Aminwasserstoffatome der Komponente (A) kommen.

Als Komponente (A) eignen sich Butadien-Acrylnitril-Copolymere mit Acrylnitrilgehalten von 5 bis 45 Gew.-%, bevorzugt 10 - 30 Gew.-% und mit Butadiengehalten von 55 bis 95 Gew.-%, bevorzugt 70 - 90 Gew.-%, die pro Molekül im Mittel 1,4 - 3,0 primäre und/oder sekundäre Aminogruppen, sowie gegebenenfalls tertiäre Aminogruppen, enthalten. Das zahlenmittlere Molekulargewicht der Copolymeren beträgt vorteilhaft 500 - 15 000, bevorzugt 2000 - 8000.

Die aminogruppenhaltigen Copolymere lassen sich beispielsweise durch Umsetzung von Carboxylgruppen enthaltenden Butadien-Acrylnitril-Copolymeren mit Diaminen erhalten. Solche aminogruppenhaltigen Butadien-Acrylnitril-Copolymere sind kommerziell erhältlich (z.B. HYCAR® ATBN 1300 X 16, 1300 X 21 und 1300 X 35).

Weiterhin kann man Aminogruppen enthaltende Butadien-Acrylnitril-Copolymere durch partielle Hydrierung von Butadien-Acrylnitril-Copolymeren oder durch Addition von primären Aminen an epoxidgruppenhaltige Butadien-Acrylnitril-Copolymere herstellen.

Es können auch Mischungen aus primäre und/oder sekundäre Aminogruppen enthaltenden Butadien-Acrylnitril-Copolymeren als Komponente (A) eingesetzt werden.

Als Komponente (B) werden organische Verbindungen eingesetzt, die ein zahlenmittleres Molekulargewicht von 140 bis 10.000 aufweisen und die im statistischen Mittel mindestens 1,5, vorzugsweise 1,5 bis 3,0, besonders bevorzugt 2,0 Epoxidgruppen pro Molekül enthalten. Es können auch Mischungen aus solchen Verbindungen als Komponente (B) eingesetzt werden.

Als Komponente (B) werden bevorzugt Glycidylether von aliphatischen Diolen, wie Butandiol oder Hexandiol oder Glycidylether von im statistischen Mittel mindestens zwei Hydroxylgruppen pro Molekül enthaltenden Polyphenolen eingesetzt. Beispiele für geeignete Polyphenole sind 2,2-Bis-(4-hydroxyphenyl)-propan (Bisphenol A), 4,4'-Dihydroxybenzophenon, 4,4'-Dihydroxyphenylsulfon, 1,1-Bis(4-hydroxyphenyl)-ethan, 1,1-Bis-(4-hydroxyphenyl)-isobutan, 2,2-Bis-(4-hydroxy-tert.-butyl-phenyl)-propan, Bis-(2-hydroxynaphthyl)-methan und 1,5-Dihydroxynaphthalin.

In manchen Fällen ist es wünschenswert, aromatische Epoxidharze mit höherem Molekulargewicht als Komponente (B) einzusetzen. Diese kann man erhalten, indem man die oben genannten Diglycidylether mit einem Polyphenol, beispielsweise 2,2-Bis-(4-hydroxyphenyl)-propan, reagieren läßt und dann die erhaltenen Produkte mit Epichlorhydrin unter Herstellung von Polyglycidylethern weiter umsetzt.

Außerdem kommen Diglycidylether von Polyolen, wie sie z.B. durch Polymerisation von Ethylenoxid, Propylenoxid, Tetrahydrofuran oder anderen cyclischen Ethern zugänglich sind, als Komponente (B) in Frage.

Zur Herstellung der erfindungsgemäß einzusetzenden Umsetzungsprodukte werden die Komponenten (A) und (B) im allgemeinen in solchen Mengen eingesetzt, daß auf ein Äquivalent-Epoxidgruppen der Komponente (B) 1,05 bis 20, vorzugsweise 1,2 bis 4,0 Äquivalente reaktive Aminwasserstoffatome der Komponente (A) kommen.

Die Komponenten (A) und (B) werden zweckmäßigerweise in einem organischen Lösemittel oder Lösemittelgemisch, das sich sowohl gegenüber Aminogruppen als auch gegenüber Epoxidgruppen inert verhält, bei Reaktionstemperaturen von 20 - 150°C, vorzugsweise 50 - 110°C, miteinander umgesetzt. Nach Beendigung der Epoxid-Aminreaktion können die Aminogruppen ganz oder teilweise mit Säuren neutralisiert werden und das so protonierte Umsetzungsprodukt kann dann in Wasser dispergiert werden. Das Umsetzungprodukt kann auch in ein Wasser/Säure-Gemisch gegeben werden. Aus den so erhaltenen Dispersionen können organische Lösemittel durch Destillation entfernt werden.

Zur Protonierung der erfindungsgemäß einzusetzenden Umsetzungsprodukte können anorganische und organische Säuren eingesetzt werden. Vorzugsweise werden organische Säuren, wie z.B. Ameisensäure, Essigsäure, Propionsäure oder Milchsäure eingesetzt.

Die erfindungsgemäß einzusetzenden Umsetzungsprodukte weisen zweckmäßigerweise Aminzahlen von 25 bis 170, vorzugsweise von 40 bis 100 mg KOH/g Festsubstanz auf.

Die auf die oben beschriebene Art und Weise herstellbaren wäßrigen Dispersionen der erfindungsgemäß einzusetzenden Umsetzungsprodukte aus den Komponenten (A) und (B) können im Prinzip jedem ein- oder mehrkomponentigen wäßrigen Lack, der zur Grundierung oder einschichtigen Lackierung von Kunststoffen geeignet ist, zugesetzt werden.

Die erfindungsgemäß einzusetzenden Umsetzungsprodukte werden vorzugsweise in ein- oder zweikomponentigen wäßrigen Lacken eingesetzt, die ein wasserverdünnbares Epoxidharz oder eine Mischung aus wasserverdünnbaren Epoxidharzen in Kombination mit einem Vernetzungsmittel oder einer Mischung aus Vernetzungsmitteln enthalten. Wasserverdünnbare Epoxidharze sind bekannt und im Handel erhältlich (vgl. z.B. die Epoxidharze DOW DER 662 (Dow Chemicals) und Beckopox EP 384 (Hoechst AG) sowie die Patentdokumente EP-A-272 595, EP-A-81 163, EP-A-346 742, DE-A-26 59 989, DE-A-26 022 22, DE-A-26 59 928, DE-A-26 02 221, DE-A-26 02 220, DE-A-26 02 255 und DE-A-23 32 165). Als wasserverdünnbare Epoxidharze können beispielsweise wasserverdünnbare aliphatische, cycloaliphatische oder aromatische Epoxidharze des Glycidylether- oder Glycidylestertyps eingesetzt werden. Die Wasserverdünnbarkeit der Epoxidharze kann beispielsweise durch Zusatz geeigneter Emulgatoren und/oder chemische Modifikation der Epoxidharze (z.B. Einbau hydrophiler Molekülsegmente) erreicht werden. Vorzugsweise werden wasserverdünnbare Epoxidharze auf Basis von Polyglycidylethern, vorzugsweise Diclycidylethern von Polyphenolen, vorzugsweise Diphenolen, insbesondere Bisphenol-A eingesetzt. Die eingesetzten Epoxidharze weisen in der Regel zahlenmittlere Molekulargewichte von 140 bis 5000 auf. Es können aber auch Epoxidharze mit höheren zahlenmittleren Molekulargewichten eingesezt werden. Als Vernetzungsmittel können im Prinzip alle für wasserverdünnbare Epoxidharze geeigneten Vernetzungsmittel eingesetzt werden.

Es ist jedoch bevorzugt, primäre und/oder sekundäre Aminogruppen aufweisende Vernetzungsmittel einzusetzen. Als Beispiele für solche Vernetzungsmittel werden genannt: aliphatische Polyamine (z.B. Ethylendiamin, Diethylentriamin, Triethylentetramin, Dipropylentriamin), cycloaliphatische Diamine (z.B. 3,3'-Dimethyl-4,4'-diaminodicyclohexylmethan, Isophorondiamin), aminofunktionelle hydrierte Heterocylen (z.B. N-Aminoethylpiperazin) und Polyamidoamine, insbesondere Polyamidoamine dimerer Fettsäuren.

Als bevorzugtes Vernetzungsmittel wird ein Umsetzungsprodukt aus Bisphenol-A-diglycidylether, Isophorondiamin und einem Polyetherpolyol, wie z.B. Polyethylenglykol eingesetzt. Derartige Vernetzungsmittel sind im Handel als "®Beckopox-Spezialhärter EH 623" (Hoechst AG) erhältlich und werden in der EP-A-605 beschrieben.

Es ist bevorzugt, die Lacke, die ein wasserverdünnbares Epoxidharz als Bindemittel und ein primäre und/oder sekundäre Aminogruppen aufweisendes Vernetzungsmittel enthalten, als Zweikomponenten-Systeme zu formulieren. Dabei ist es zweckmäßig, aus dem Epoxidharz und dem protonierten Umsetzungsprodukt eine Komponente herzustellen und aus dem primäre und/oder sekundäre Aminogruppen aufweisenden Vernetzungsmittel gegebenenfalls zusammen mit Pigmenten und/oder Füllstoffen die zweite Komponente herzustellen. Die das Epoxidharz und das protonierte Umsetzungsprodukt enthaltende Komponente weist dabei in der Regel einen pH-Wert < 7,0 und die das primäre und/oder sekundäre Aminogruppen aufweisende Vernetzungsmittel enthaltende Komponente weist in der Regel einen pH-Wert > 7,0 auf. Die beiden Komponenten werden kurz vor der Applikation gemischt.

Wenn in dieser Beschreibung von "Lack" gesprochen wird, dann ist stets - wenn nicht ausdrücklich etwas anderes festgestellt wird - der vollständige Lack, d.h. bei Zweikomponenten-Systemen der nach Mischung der beiden Komponenten erhaltene Lack gemeint.

Die erfindungsgemäß einzusetzenden Umsetzungsprodukte sollten in solchen Mengen in die wäßrigen Lacke eingearbeitet werden, daß die Lacke 5 bis 50, vorzugsweise 10 bis 20 Gew.-% des Umsetzungsproduktes enthalten, wobei die Gew.-%-Angaben auf die im Lack vorhandene Gesamtmenge an Bindemittel und gegebenenfalls Vernetzungsmittel bezogen sind.

Besonders gute Resultate werden erhalten, wenn die eingesetzte Menge an Umsetzungsproukt, die eingesetzte Menge an aminogruppenhaltigem Vernetzungsmittel und die eingesetzte Menge an Epoxidharz so ausgewählt werden, daß alle im Umsetzungsprodukt und im Vernetzungsmittel enthaltenen, gegenüber Epoxidgruppen reaktiven sekundären und/oder primären Aminogruppen bei der Aushärtung des Lackes mit Epoxidgruppen abreagieren können.

Die wäßrigen Lacke können neben dem erfindungsgemäß einzusetzenden Umsetzungsprodukt, Bindemitteln und gegebenenfalls Vernetzungsmitteln selbstverständlich noch weitere übliche Zusätze, wie z.B. organische Lösemittel, Verlaufsmittel, Lichtschutzmittel, Rheologiehilfsmittel, Pigmente, Füllstoffe, Katalysatoren usw. enthalten.

Die in Rede stehenden wäßrigen Lacke enthalten im applikationsfertigen Zustand in der Regel 30 bis 80, vorzugsweise 45 bis 70 Gew.-% Wasser, 0 bis 50, vorzugsweise 0 bis 10 Gew.-% organische Lösemittel, 1,0 bis 25, vorzugsweise 2 bis 10 Gew.-% des erfindungsgemäß einzusetzenden Umsetzungsproduktes, 5 bis 50, vorzugsweise 10 bis 40 Gew.-% Bindemittel, 1 bis 40, vorzugsweise 3 bis 10 Gew.-% Vernetzungsmittel, 0 bis 40, vorzugsweise 5 bis 25 Gew.-% Pigmente und/oder Füllstoffe und 0 bis 10 Gew.-% sonstige Zusätze, wie z.B. Katalysatoren, Verdickungsmittel, Verlaufsmittel usw., wobei die Gewichtsprozentangaben auf die Gesamtrezeptur der Lacke im applikationsfertigen Zustand (d.h. z.B. bei Spritzviskosität) bezogen sind.

Da Kunststoffe in der Regel temperaturempfindlich sind, müssen die wäßrigen Lacke im allgemeinen bei Temperaturen von bis zu 100°C bei Thermoplasten und bis zu 140°C bei Duroplasten ausgehärtet werden.

Mit wäßrigen Lacken, die die erfindungsgemäß einzusetzenden Umsetzungsprodukte enthalten, können prinzipiell alle Kunststoffe grundiert oder einschichtig lackiert werden. Als Beispiele für geeignete Kunststoffe werden genannt: ABS, AMMA, ASA, CA, CAB, EP, UF, CF, MF, MPF, PF, PAN, PA, PC, PE, HDPE, LDPE, PETP, PMMA, PP, PS, SB, PUR, PVC, RF, SAN, PP-EPDM und UP (Kurzbezeichnungen nach DIN 7728 T1). Bevorzugte Kunststoffsubstrate sind: Polycarbonat, Polypropylen-EPDM und Polyamid. Die zu lackierenden Kunststoffe können selbstverständlich Polymerblends, modifizierte Kunststoffe oder faserverstärkte Kunststoffe sein. In vielen Fällen ist es zweckmäßig, die zu lackierenden Kunststoffe vor der Lackierung unter Einsatz geeigneter Methoden (z. B. Beflammung, Corona-Behandlung, Beschichtung mit einen Haftvermittler wie z. B. chlorierte Polyolefine usw.) vorzubehandeln.

Die wäßrigen Lacke, die die erfindungsgemäß einzusetzenden Umsetzungsprodukte enthalten, werden vorzugsweise zur Grundierung von Kunststoffen eingesetzt und können z.B. durch Spritzen, Rakeln oder Tauchen appliziert werden. Die so grundierten Kunststoffe können problemlos z.B. mit einschichtigen Uni- oder Metalleffektlackierungen oder mit zweischichtigen Uni- oder Metalleffektlackierungen des base coat-clear coat-Typs überlackiert werden.

Die Erfindung wird in den folgenden Beispielen näher erläutert.
1. Herstellung einer wäßrigen Dispersion des erfindungsgemäß einzusetzenden Umsetzungsproduktes
   359,8g HYCAR® ATBN 1300X16 (sekundäre Aminogruppen enthaltendes Butadien-Acrylnitril-Copolymer mit einem Acrylnitrilgehalt von 16 Gew.-% und einem zahlenmittleren Molekulargewicht von 3500 - 3800, erhältlich durch Umsetzung eines endständige Carboxylgruppen aufweisenden Butadien-Acrylnitril-Copolymers mit Aminoethylpiperazin) werden in 174 g Toluol gelöst, mit 46,3 g eines Polytetrahydrofurandiglycidylethers mit einem Epoxidäquivalentgewicht von ungefähr 420 versetzt und so lange (etwa 10 Stunden) bei 80°C gerührt bis praktisch keine Epoxidgruppen mehr nachweisbar sind. Anschließend wird mit 68,4 g Ethylenglykolmonobutylether und 116,0 g Isobutanol verdünnt und auf 40°C abgekühlt. Dann werden 6,4 g Eisessig und 1588 ml deionisiertes Wasser innerhalb von einer Stunde zugegeben. Die so erhaltene Dispersion wird unter vermindertem Druck von organischen Lösemitteln befreit und mit deionisiertem Wasser auf einen Feststoffgehalt von 21,5 Gew.-% eingestellt. Die Aminzahl des Umsetzungsproduktes beträgt 61,2 mg pro g Festsubstanz.
2. Herstellung einer Vernetzungsmittel enthaltenden Lackkomponente
   170 g einer 80 %igen wäßrigen Lösung des Epoxidharzvernetzungsmittels Beckopox EH 623 (Hersteller: Hoechst AG) werden mit 460 g Wasser, 180 g Talkum, 320 g TiO₂, 2 g Flammruß, 8 g Bentone SD 2 (Kronos Titan GmbH) und 19 g Borchigel L75 (50 %ig in Wasser, Gebrüder Borchers) vordispergiert und in einer Kugelmühle auf eine Kornfeinheit von 15 µm gemahlen. Anschließend werden 100 g Wasser in das Mahlgut eingearbeitet.
3.1 Herstellung einer Lackkomponente, die Bindemittel und das erfindungsgemäß einzusetzende Umsetzungsprodukt enthält
   62,6 g der unter Punkt 1 beschriebenen Dispersion und 92 g einer wäßrigen Epoxidharzdispersion auf Basis Bisphenol A-diglycidylether (Beckopox EP 384, Hersteller: Hoechst AG) werden gemischt.
3.2 Herstellung einer Lackkomponente, die anstelle des erfindungsgemäß einzusetzenden Umsetzungsproduktes eine Styrol-Butadien-Kautschuk-Dispersion enthält
   29,2 g einer wäßrigen 50 %igen Styrol-Butadien Kautschuk-Dispersion (Lipaton X 5521, Hersteller: Hüls AG) und 84,3 g der unter 3.1 beschriebenen Epoxidharzdispersion werden gemischt.
4. Herstellung und Applikation der Lacke und Prüfung
4.1 126 g der Lackkomponente gemäß Pkt. 2 werden mit 154,5 g der Lackkomponente gemäß Pkt. 3.1 gemischt und mit entionisiertem Wasser auf eine Viskosität (Spritzviskosität) von 25 - 27 sec. (DIN-4-Becher) eingestellt. Der so erhaltene Lack wird auf eine mit Isopropanol vorgereinigte Polycarbonatplatte gespritzt (Trockenfilmdicke: 25 - 30 µm) und nach einer Abdunstzeit von 10 min. bei RT 30 min. bei 80°C ausgehärtet. Anschließend werden ein handelsüblicher Metalleffektbasislack und ein handelsüblicher Klarlack naß in naß überlackiert und 45 min. bei 80°C eingebrannt. Die so erhaltenen lackierten Substrate werden nach 3-tägiger Lagerung bei Raumtemperatur einer Prüfung auf Haftung (Gitterschnitt nach DIN 53 151) und einer Prüfung auf Kälteschlagzähigkeit (Durchstoß-Test nach DIN 53 443 Teil 2) unterworfen. Die Ergebnisse sind der Tabelle 1 zu entnehmen.
4.2 126 g der Lackkomponente gemäß Pkt. 2 werden mit 113,5 g der Lackkomponente gemäß Pkt. 3.2 gemischt und wie unter Pkt. 4.1 beschrieben weiter verarbeitet. Das mit diesem Lack lackierte Substrat wird wie das gemäß Pkt. 4.1. erhaltene Substrat geprüft. Die Prüfergebnisse sind der Tabelle 1 zu entnehmen.
4.3 126 g der Lackkomponente gemäß Pkt. 2 werden mit 84,4 g der unter Pkt. 3.1 beschriebenen Epoxidharzdispersion gemischt und wie unter Punkt 4.1 beschrieben weiter verarbeitet. Die Prüfergebnisse des mit diesem Lack lackierten Substrats sind Tabelle 1 zu entnehmen.

**Tabelle 1**

| Prüfergebnisse | | | |
|---|---|---|---|
| Lackierung gemäß Pkt. | 4.1 | 4.2 | 4.3 |
| Gitterschnitt | 0 | 0 | 0 |
| Temperatur des zähspröd Übergangs (ermittelt beim Durchstoß-Test) | -20°C | -6°C | 0°C |

## Patentansprüche

1. Verfahren zum Grundieren oder einschichtigen Lackieren von Kunststoffen mit wäßrigen Lacken, dadurch gekennzeichnet, daß ein wäßriger Lack eingesetzt wird, der ein zumindest teilweise protoniertes Umsetzungsprodukt aus
(A) einem Butadien-Acrylnitrilcopolymeren mit einem Acrylnitrilgehalt von 5 bis 45 Gew. % und einem Butadiengehalt von 55 bis 95 Gew. %, das pro Molekül im Mittel 1,4 bis 3,0 primäre und/oder sekundäre Aminogruppen, sowie gegebenenfalls tertiäre Aminogruppen, enthält und ein zahlenmittleres Molekulargewicht von 500 bis 15.000 aufweist oder ein Gemisch aus solchen Butadien-Acrylnitrilcopolymeren und
(B) einer organischen Verbindung, die ein zahlenmittleres Molekulargewicht von 140 bis 10.000 aufweist und im statistischen Mittel mindestens 1,5 Epoxidgruppen pro Molekül enthält, ausgewählt aus der Gruppe der
- Glycidylether von aliphatischen Diolen
- Glycidylether von Polyphenolen
- aromatischen Epoxidharze, die erhältlich sind, indem man die oben genannten Glycidylether mit einem Polyphenol reagieren läßt und das erhaltene Produkt mit Epichlorhydrin weiter umsetzt
- Glycidylether von Polyolen, die durch Polymerisation von Ethylenoxid, Propylenoxid, Tetrahydrofuran oder anderen cyclischen Ethern erhältlich sind
oder ein Gemisch aus solchen organischen Verbindungen
enthält, wobei die Komponenten (A) und (B) bei der Herstellung des Umsetzungsproduktes in solchen Mengen eingesetzt werden, daß auf ein Äquivalent Epoxidgruppen der Komponente (B) 1,05 bis 20 Äquivalente reaktive Aminwasserstoffatome der Komponente (A) kommen.

2. Verfahren nach Anspruch 1, dadurch gekennzeichnet, daß der Lack ein wasserverdünnbares Epoxidharz oder eine Mischung aus wasserverdünnbaren Epoxidharzen als Bindemittel enthält.

3. Verfahren nach Anspruch 2, dadurch gekennzeichnet, daß der Lack ein primäre und/oder sekundäre Aminogruppen aufweisendes Vernetzungsmittel oder eine Mischung aus solchen Vernetzungsmitteln enthält.

4. Verwendung eines wäßrigen Lackes, der ein zumindest teilweise protoniertes Umsetzungsprodukt aus
(A) einem Butadien-Acrylnitrilcopolymeren mit einem Acrylnitrilgehalt von 5 bis 45 Gew. % und einem Butadiengehalt von 55 bis 95 Gew. %, das pro Molekül im Mittel 1,4 bis 3,0 primäre und/oder sekundäre Aminogruppen, sowie gegebenenfalls tertiäre Aminogruppen, enthält und ein zahlenmittleres Molekulargewicht von 500 bis 15.000 aufweist oder ein Gemisch aus solchen Butadien-Acrylnitrilcopolymeren und
(B) einer organischen Verbindung, die ein zahlenmittleres Molekulargewicht von 140 bis 10.000 aufweist und im statistischen Mittel mindestens 1,5 Epoxidgruppen pro Molekül enthält, ausgewählt aus der Gruppe der
- Glycidylether von aliphatischen Diolen
- Glycidylether von Polyphenolen
- aromatischen Epoxidharze, die erhältlich sind, indem man die oben genannten Glycidylether mit einem Polyphenol reagieren läßt und das erhaltene Produkt mit Epichlorhydrin weiter umsetzt
- Glycidylether von Polyolen, die durch Polymerisation von Ethylenoxid, Propylenoxid, Tetrahydrofuran oder anderen cyclischen Ethern erhältlich sind
oder ein Gemisch aus solchen organischen Verbindungen
enthält, wobei die Komponenten (A) und (B) bei der Herstellung des Umsetzungsproduktes in solchen Mengen eingesetzt werden, daß auf ein Äquivalent Epoxidgruppen der Komponente (B) 1,05 bis 20 Äquivalente reaktive Aminwasserstoffatome der Komponente (A) kommen, zum Grundieren oder einschichtigen Lackieren von Kunststoffen.

5. Verwendung nach Anspruch 4, dadurch gekennzeichnet, daß der Lack ein wasserverdünnbares Epoxidharz oder eine Mischung aus wasserverdünnbaren Epoxidharzen als Bindemittel enthält.

6. Verwendung nach Anspruch 5, dadurch gekennzeichnet, daß der Lack ein primäre und/oder sekundäre Aminogruppen aufweisendes Vernetzungsmittel oder eine Mischung aus solchen Vernetzungsmitteln enthält.

## Claims

1. Method of priming or one-coat painting of plastics using water-borne paints, characterized in that a water-borne paint is employed which contains an at least partially protonated product of the reaction of
(A) a butadiene-acrylonitrile copolymer having an acrylonitrile content of from 5 to 45% by weight and a butadiene content of from 55 to 95% by weight which contains, per molecule, on average from 1.4 to 3.0 primary and/or secondary amino groups, and optionally tertiary amino groups, and has a number average molecular weight of from 500 to 15,000, or a mixture of such butadiene-acrylonitrile copolymers,
and
(B) an organic compound which has a number average molecular weight of from 140 to 10,000 and contains, on statistical average, at least 1.5 epoxide groups per molecule, selected from the group comprising
- glycidyl ethers of aliphatic diols,
- glycidyl ethers of polyphenols,
- aromatic epoxy resins obtainable by allowing the abovementioned glycidyl ethers to react with a polyphenol and reacting the resultant product with epichlorohydrin,
- glycidyl ethers of polyols obtainable by polymerization of ethylene oxide, propylene oxide, tetrahydrofuran or other cyclic ethers,
or a mixture of such organic compounds,
where components (A) and (B) are employed in the preparation of the reaction product in such amounts that from 1.05 to 20 equivalents of reactive amine hydrogen atoms from component (A) are present per equivalent of epoxide groups from component (B).

2. Method according to Claim 1, characterized in that the paint contains a water-dilutable epoxy resin or a mixture of water-dilutable epoxy resins as binder.

3. Method according to Claim 2, characterized in that the paint contains a crosslinking agent containing primary and/or secondary amino groups, or a mixture of such crosslinking agents.

4. The use of a water-borne paint which contains an at least partially protonated product of the reaction of
(A) a butadiene-acrylonitrile copolymer having an acrylonitrile content of from 5 to 45% by weight and a butadiene content of from 55 to 95% by weight which contains, per molecule, on average from 1.4 to 3.0 primary and/or secondary amino groups, and optionally tertiary amino groups, and has a number average molecular weight of from 500 to 15,000, or a mixture of such butadiene-acrylonitrile copolymers,
and
(B) an organic compound which has a number average molecular weight of from 140 to 10,000 and contains, on statistical average, at least 1.5 epoxide groups per molecule, selected from the group comprising
- glycidyl ethers of aliphatic diols,
- glycidyl ethers of polyphenols,
- aromatic epoxy resins obtainable by allowing the abovementioned glycidyl ethers to react with a polyphenol and reacting the resultant product with epichlorohydrin,
- glycidyl ethers of polyols obtainable by polymerization of ethylene oxide, propylene oxide, tetrahydrofuran or other cyclic ethers,
or a mixture of such organic compounds,
where components (A) and (B) are employed in the preparation of the reaction product in such amounts that from 1.05 to 20 equivalents of reactive amine hydrogen atoms from component (A) are present per equivalent of epoxide groups from component (B) for priming or one-coat painting of plastics.

5. The use according to Claim 4, characterized in that the paint contains a water-dilutable epoxy resin or a mixture of water-dilutable epoxy resins as binder.

6. The use according to Claim 5, characterized in that the paint contains a crosslinking agent containing primary and/or secondary amino groups, or a mixture of such crosslinking agents.

## Revendications

1. Procédé pour l'apprêt ou le laquage monocouche de matières plastiques à l'aide de laques aqueuses, caractérisé en ce que l'on utilise une laque aqueuse, qui contient un produit de réaction au moins partiellement protoné obtenu à partir
(A) d'un copolymère butadiène-nitrile acrylique ayant une teneur en nitrile acrylique de 5 à 45 % en poids et une teneur en butadiène de 55 à 95 % en poids, qui contient par molécule en moyenne de 1,4 à 3,0 groupements amino primaires et/ou secondaires ainsi que, le cas échéant, des groupements tertiaires, et présente un poids moléculaire moyen au nombre de 500 à 15 000, ou d'un mélange de tels copolymères butadiène-nitrile acrylique et
(B) d'un composé organique, qui présente un poids moléculaire moyen au nombre de 140 à 10 000 et qui contient en moyenne statistique au moins 1,5 groupements époxydes par molécule, choisi parmi le groupe
- des éthers glycidyliques de diols aliphatiques
- des éthers glycidyliques de polyphénols
- des résines époxydes aromatiques, que l'on obtient en laissant réagir les éthers glycidyliques nommés plus haut avec un polyphénol et en faisant réagir en plus le produit obtenu avec l'épichlorhydrine
- des éthers glycidyliques de polyols, que l'on obtient par la polymérisation de l'oxyde d'éthylène, de l'oxyde de propylène, du tétrahydrofurane ou d'autres éthers cycliques ou
d'un mélange de tels composés organiques,
les composants (A) et (B) étant utilisés lors de la préparation du produit de réaction dans des quantités telles qu'à un équivalent de groupements époxydes du composant (B) correspondent de 1,05 à 20 équivalents d'atomes d'hydrogène d'amine réactifs du composant (A).

2. Procédé selon la revendication 1, caractérisé en ce que la laque contient en tant que liant une résine époxyde diluable à l'eau ou un mélange de résines époxydes diluables à l'eau.

3. Procédé selon la revendication 2, caractérisé en ce que la laque contient un agent de réticulation présentant des groupements amino primaires et/ou secondaires ou un mélange de tels agents de réticulation.

4. Utilisation d'une laque aqueuse, qui contient un produit de réaction au moins partiellement protoné obtenu à partir
(A) d'un copolymère butadiène-nitrile acrylique ayant une teneur en nitrile acrylique de 5 à 45 % en poids et une teneur en butadiène de 55 à 95 % en poids, qui contient par molécule en moyenne de 1,4 à 3,0 groupements amino primaires et/ou secondaires ainsi que, le cas échéant, des groupements tertiaires, et présente un poids moléculaire moyen au nombre de 500 à 15 000, ou d'un mélange de tels copolymères butadiène-nitrile acrylique et
(B) d'un composé organique, qui présente un poids moléculaire moyen au nombre de 140 à 10 000 et qui contient en moyenne statistique au moins 1,5 groupements époxydes par molécule, choisi parmi le groupe
- des éthers glycidyliques de diols aliphatiques
- des éthers glycidyliques de polyphénols
- des résines époxydes aromatiques, que l'on obtient en laissant réagir les éthers glycidyliques nommés plus haut avec un polyphénol et en faisant réagir en plus le produit obtenu avec l'épichlorhydrine
- des éthers glycidyliques de polyols, que l'on obtient par la polymérisation de l'oxyde d'éthylène, de l'oxyde de propylène, du tétrahydrofurane ou d'autres éthers cycliques ou
d'un mélange de tels composés organiques,
les composants (A) et (B) étant utilisés lors de la préparation du produit de réaction dans des quantités telles qu'à un équivalent de groupements époxydes du composant (B) correspondent de 1,05 à 20 équivalents d'atomes d'hydrogène d'amine réactifs du composant (A), pour l'apprêt ou le laquage monocouche de matières plastiques.

5. Utilisation selon la revendication 4, caractérisé en ce que la laque contient en tant que liant une résine époxyde diluable à l'eau ou un mélange des résines époxydes diluables à l'eau.

6. Utilisation selon la revendication 5, caractérisé en ce que la laque contient un agent de réticulation présentant des groupements amino primaires et/ou secondaires ou un mélange de tels agents de réticulation.
